# EUROPEAN PATENT APPLICATION

(11) **EP 1 563 725 A1**
(43) Date of publication of application: **17.08.2005**
(21) Application number: 04100563.8
(22) Date of filing: 13.02.2004
(51) Int. Cl.: A01F 25/20, A01D 90/02, A01K 5/00, B60P 1/48, B60P 1/50, B65G 65/04

(54) **Drivable mixing apparatus for fodder**

(71) Applicant: Liet, Cornelis Hendricus, NL-7581 PJ Losser (NL)
(72) Inventor: Liet, Cornelis Hendricus, NL-7581 PJ Losser (NL)
(74) Representative: Voncken, Bartholomeus Maria Christiaan

(57) **Abstract**

The invention relates to a drivable mixing apparatus for fodder, comprising a mixing chamber (1) provided with a mixing element (2) and a loading device (3) for detaching a desired amount of fodder from an external stock of fodder and depositing said amount into the mixing chamber. The loading device comprises a scoop (4) having an at least substantially open upper side (15), which can be moved in upward direction for the purpose of detaching fodder from the stock of fodder, and which can furthermore be rotated about a horizontal axis of rotation (5) extending transversely to the plane of movement of the scoop, during which rotating movement the current vertical position of the scoop is substantially maintained, and which is provided with cutting means (16) for detaching the fodder.

## Description

The invention relates to a drivable mixing apparatus for fodder, comprising a mixing chamber provided with a mixing element and a loading device for detaching a desired amount of fodder from an external stock of fodder and depositing said amount into the mixing chamber.

Drivable mixing apparatuses of the type referred to in the introduction are known in various embodiments thereof. Various kinds of fodder can be detached from various stocks of fodder by means of the loading device and be deposited into the mixing chamber, after which mixing of the fodder takes place. In this way the desired fodder composition can be realised. With a view to providing the most optimum composition of the fodder, it is desirable that each and every amount of fodder that is deposited into the mixing chamber be precisely weighed. The known apparatuses are hardly able to realise this, if at all, or only with the use of complex features. Thus, a known mixing apparatus is fitted with cutters, which enable precise measuring of the fodder, to be true, but which damage the structure thereof to such an extent that it has a harmful effect as regards the processes that take place in the rumens of the animals that eat the fodder.

It is an object of the present invention to provide a mixing device of the type referred to in the introduction, by means of which the aforesaid drawback can be obviated in a simple yet efficient manner.

In order to accomplish that object, the drivable mixing apparatus according to the present invention is characterized in that the loading device comprises a scoop having an at least substantially open upper side, which can be moved in upward direction for the purpose of detaching fodder from the stock of fodder, and which can furthermore be rotated about a horizontal axis of rotation extending transversely to the plane of movement of the scoop, during which rotating movement the current vertical position of the scoop is substantially maintained, and which is provided with cutting means for detaching the fodder.

Since the scoop can make two different movements, viz. said upward movement and said rotating movement about the horizontal axis of rotation, a desired amount of fodder can be detached from the stock of fodder in an optimum manner therewith. At the beginning of the detaching process, the scoop is in a lowermost position, in which it has rotated about the horizontal axis of rotation in such a manner that its open upper side faces towards the stock of fodder. Then the drivable mixing apparatus is moved (e.g. driven) towards the stock of fodder, with the scoop engaging the stock of fodder with its open side (and with the cutting means). Then the scoop is rotated about its horizontal axis of rotation, so that its open side is directed substantially upwards, viz. in the direction of a movement from the bottom to the top. Subsequently, the scoop is moved upwards in this rotated position, with the cutting means detaching the fodder. This requires significantly less power than the use of cutters. In addition, no damage is caused to the structure of the fodder.

Once the desired amount of fodder has been detached from the stock of fodder, the scoop can be rotated further until its open side substantially faces away from the stock of fodder and the scoop can be retracted from the stock of fodder.

When this manner of operation is used, the scoop need not be moved along the entire height of the stock of fodder upon detachment of fodder from said stock of fodder (in prior art apparatuses a downward movement is made, which movement generally takes place over the entire height of the stock of fodder). Consequently, it is possible in a simple manner to load any desired amount of fodder into the scoop and subsequently deposit it into the mixing chamber. This makes it possible to introduce exactly the required amount of each type of fodder into the mixing chamber, so that the fodder composition that is eventually obtained is exactly in accordance with the desired composition. In addition to that, the thickness of the detached slab of fodder and the path of movement of the scoop can be determined through suitable manipulation of the scoop. An advantage of this is that local heating spots in the stock of fodder can easily be removed.

The volume of the scoop will have to be large enough to accommodate the desired stock of fodder, of course.

In a preferred embodiment of the mixing apparatus according to the invention, the scoop has a front horizontal cutting edge and a scoop bottom which joins said cutting edge, wherein, starting from the cutting edge, the distance between a point thereof and the axis of rotation is maximally equal to the distance between said axis of rotation and the horizontal cutting edge, at least for a first part of the scoop bottom. Using such a configuration of the scoop, in particular of the bottom thereof, it can be ensured that the scoop bottom will not exert any compressive forces on the stock of fodder during rotation of the scoop about the horizontal axis of rotation, which compressive forces would impede the scoop movement and subject the construction to high loads, whilst in addition a significant increase of the required power for realising the scoop movement would occur.

Within this framework, the relevant first part of the scoop bottom may substantially describe a circular arc, for example, with the axis of rotation as the centre.

Furthermore, in order to enable an effective detachment of the fodder from the stock of fodder, the edges of the scoop that engage the fodder during the detaching operation are preferably embodied as cutting members, e.g. cutting knives capable of linear reciprocating movement. For this purpose, cutting knives may be used which have been known for quite some time already in conventional U-shaped cutting frames for cutting loose fodder. One of the aforesaid engaging edges of the scoop will generally be the aforesaid front horizontal cutting edge. Furthermore, such edges may consist of transverse edges extending perpendicularly to the front horizontal cutting edge.

As already noted before, the scoop carries out an upward and downward movement besides its rotational movement about the horizontal axis of rotation. According to first possible manner of realising such a movement, the scoop is connected to the end of a pivoting arm that pivots about a horizontal pivot pin. As a result, the scoop will substantially describe a circular arc during its upward and downward movement. Eventually, the scoop can be positioned above the mixing chamber by means of such a movement, so that the fodder can be transferred from the scoop to the mixing chamber.

In order to optimise such a movement of the scoop by means of a pivoting arm, it is possible to construct the pivoting arm as a two-part, articulated pivoting arm comprising a central, secondary horizontal pivot pin. The path followed by the scoop during its upward and downward movement can be influenced by suitably controlling the two segments of the two-part, articulated pivoting arm with respect to each other, in such a manner that the path followed by the scoop does not necessarily have to be a circular arc. In addition, suitable pivoting of the two pivoting arm sections with respect to each other about the central, secondary horizontal pivot pin makes it possible to position the scoop above the mixing chamber without the scope passing through an extremely high position above the mixing apparatus.

It is also possible, of course, to use an articulated pivoting arm that comprises more than two pivoting arm sections. In addition to that, it is possible to construct the pivoting arm as a telescopic arm.

The articulated or telescopic construction of the pivoting arm conveniently makes it possible to select the course of the cutting curve (e.g. in dependence on the weight of the fodder already present in the scoop) or to optimise the path followed by the scoop upon emptying thereof into the mixing chamber (e.g. with the pivoting arm telescoped back).

With a view to obtaining a proper transmission of the forces being exerted by the scoop to the remaining part of the mixing apparatus, it is furthermore preferable to use twin pivoting arms, i.e. two spaced-apart pivoting arms, between which the scoop extends. The construction of the pivoting arm must furthermore be such (e.g. tubular) that the loads being generated (forces, torsion) can also be absorbed when said loads are being exerted asymmetrically (e.g. cutting on one side only).

It may be noted in this connection that the construction of the scoop may be such that the maximum length of the front horizontal cutting edge is greater than the distance between the outer sides of the pivoting arms (and the thickness of the driving means). In this way it can be ensured that when a stock of fodder is present between two walls positioned some distance apart, also the fodder immediately adjacent to such walls can be removed in an effective manner.

In addition to the aforesaid use of a pivoting arm for realising the desired scoop movement, an alternative embodiment may be used in which the scoop is mounted on a slide, which can move upwards and downwards along a guide. Such a guide may be given a desired shape, of course, so that the scoop will move through a desired path of movement (and will also be pivotable with respect to the slide, of course).

Although mention has mainly been made of an upward and downward movement of the scoop in the foregoing, said movement will preferably be an upward movement, so that the detached fodder will directly land in the scoop. It should be realised in this connection that said movement will relate to the detaching of the fodder from the stock of fodder in that case. After the detached fodder has been delivered to the mixing chamber, the scoop will move in the reverse direction, i.e. downwards, of course.

As already indicated in the introduction, it is desirable to be able to determine exactly the amount of fodder to be deposited into the mixing chamber (preferably during detachment thereof from the stock of fodder already). One way of realising this with a high degree of precision is to fit the loading device with means for determining the weight of the fodder present in the scoop. Without wanting to give an exhaustive enumeration, it can be stated that such means may e.g. include strain gauges, pressure sensors and the like, which are e.g. mounted in or on the scoop, at the connection between the scoop and the pivoting arm or the slide, in driving means for one of said components or in the pivoting arm or the slide. When a sensor mounted in the pivoting arm, for example, determines the total force exerted thereon, and a pressure sensor mounted in an oil-pressure line to the cutting means determines the oil pressure, and thus the cutting force, the weight of the fodder present in the scoop can be determined from the two data (taking into account the known weight of the scoop itself).

When such means for determining the weight of the fodder present in the scoop are used, it is possible to measure during or after detachment of a particular amount of fodder from the stock of fodder whether the amount of fodder present in the scoop already corresponds to the desired weight. If the amount is too small yet, the scoop can be rotated to the desired position again so as to detach more fodder from the stock of fodder via a continued movement. In this way the desired amount of fodder can be measured with a high degree of precision by using an iterative process.

In some circumstances it may furthermore be advantageous to provide the scoop with means for clamping down therein the fodder that has been detached from the stock of fodder. This makes it possible to prevent the detached fodder from falling out of the scoop prematurely when the scoop is moved from the original position to a position above the mixing chamber. In addition, this makes it possible to load the scoop with bales of fodder instead of with detached fodder and to clamp down said bales.

When the scoop reaches the upper part of a stock of fodder, there is a risk of an upper layer of the stock of fodder becoming detached from the remaining part of the stock of fodder over a large distance. In order to prevent this, another embodiment of the mixing apparatus according to the invention proposes to use a hold-down device for engaging the upper side of the stock of fodder during detachment of fodder by means of the scoop. In this way, the hold-down device counteracts the forces being exerted in upward direction on the fodder by the scoop during the upward movement thereof. In this way undesirable detachment of a layer of fodder can be prevented in an effective manner.

Such a hold-down device may e.g. comprise two hold-down arms, which are pivotable about a horizontal pivot pin, the free ends of which arms are connected by a hold-down element. During operation of the scoop for detaching fodder from the stock of fodder, the hold-down element engages the upper side of the stock of fodder. When the hold-down device is not in use, the hold-down arms can be pivoted to a position such that the hold-down element is supported on a part of the mixing apparatus, for example.

Finally, according to a special embodiment of the mixing apparatus according to the invention, the loading device consists of an autonomously drivable unit, which can be disconnected from the remainder of the mixing apparatus. This greatly increases the range of applications of such a loading device.

The invention will be explained in more detail hereinafter with reference to the drawing, which shows a number of embodiments of the mixing apparatus according to the invention.
Fig. 1 is a schematic side elevation of a first embodiment of the mixing apparatus according to the invention;
Figs. 2-6 schematically show a part of the apparatus that, is shown in Fig. 1 during successive stages of the use thereof; and
Fig. 7 is a schematic side elevation of a second embodiment of the mixing apparatus according to the invention.

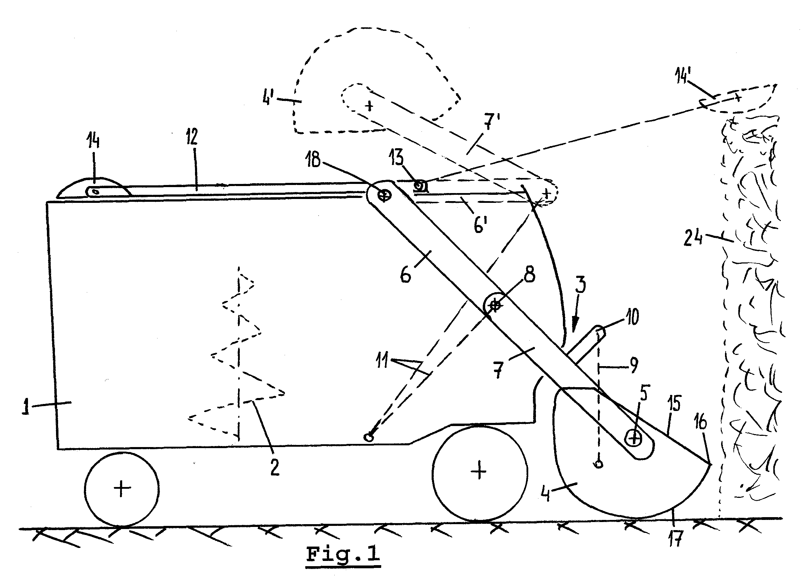

The drivable mixing apparatus that is shown in Fig. 1 comprises a mixing chamber 1, in which a mixing element 2 (of any known construction) is disposed. The mixing apparatus may be coupled to a tractor or the like, e.g. by means of a coupling device (not shown), but it may also be self-propelling. The mixing chamber may be suspended in a chassis (not shown) via sensors for determining the weight (including the contents) thereof.

The mixing apparatus furthermore comprises a loading device indicated as a whole by numeral 3. Such a loading device 3 is intended for detaching a desired amount of fodder from an external stock of fodder 24 and depositing it into the mixing chamber 1.

In the embodiment that is shown in Fig. 1, the loading device 3 comprises a scoop 4 having an at least substantially open upper side, which is rotatably connected at the location of a horizontal axis of rotation 5 (which extends perpendicularly to the plane of the drawing, therefore) to a pivoting arm that pivots about a pivot 18, said pivoting arm consisting of a first pivoting arm section 6 and a second pivoting arm section 7 in the illustrated embodiment. A central secondary horizontal pivot pin 8 interconnects the two pivoting arm sections 6 and 7. Preferably, the pivoting arms exhibit very high torsional stiffness.

A driving element 9 (e.g. a cylinder-piston assembly), schematically indicated by a dotted line, which engages the scoop 4 with one end and a jib 10 connected to the second pivoting arm section 7 with its other end, functions to rotate the scoop 4 about the horizontal axis of rotation 5. A driving element 11 (again a cylinder-piston assembly, for example), likewise schematically indicated by a dotted line, which is connected to a fixed point (e.g. the chassis) of the mixing apparatus with one end and which is connected to the secondary horizontal pivot pin 8 (in this case) with its other end, functions to pivot the pivoting arms 6, 7 about the pivot pin 18. Said pivoting of the two pivoting arm sections 6 and 7 relative to each other is effected by means not shown.

It is noted that only one pivoting arm 6, 7 is shown in Fig. 1; preferably a similar pivoting arm will be present on the opposite side of the apparatus; the scoop 4 will extend between the two pivoting arms in that case.

Furthermore, a hold-down arm 12 is pivotally connected to the mixing apparatus via a pivot pin 13. The free end of the hold-down arm 12 supports a hold-down element 14 intended for engaging the upper side of the stock of fodder 24 when fodder is being detached from the stock of fodder by means of the scoop 4 (such a position is schematically illustrated in dotted lines in Fig. 1, in which the hold-down element is indicated at 14'). It is also possible to use twin hold-down arms 12, of course. The pivot pin 13 of the hold-down arm 12 is preferably positioned close to the pivot pin 18 of the pivoting arm 6, 7.

In the embodiment that is shown in Fig. 1, the open side of the scoop 4 is indicated at 15. Said open side 15 is bounded on one side by a front horizontal cutting edge 16 (which extends perpendicularly to the plane of the drawing in Fig. 1). A scoop bottom 17 is positioned adjacent to said front horizontal cutting edge 16. In the illustrated embodiment the shape of the scoop bottom 17 has been selected so that, starting from the front cutting edge 16, the distance between a random point thereof and the axis of rotation 5 is maximally equal to the distance between the axis of rotation 5 and the horizontal cutting edge 16, at least for a first part of the scoop a bottom 17. In particular, the part in question (or a portion thereof) of the scoop bottom 17 can describe a circular arc, with the axis of rotation 5 as the centre. The part of the scoop bottom 17 directly adjacent to the front cutting edge 16 may also be flat.

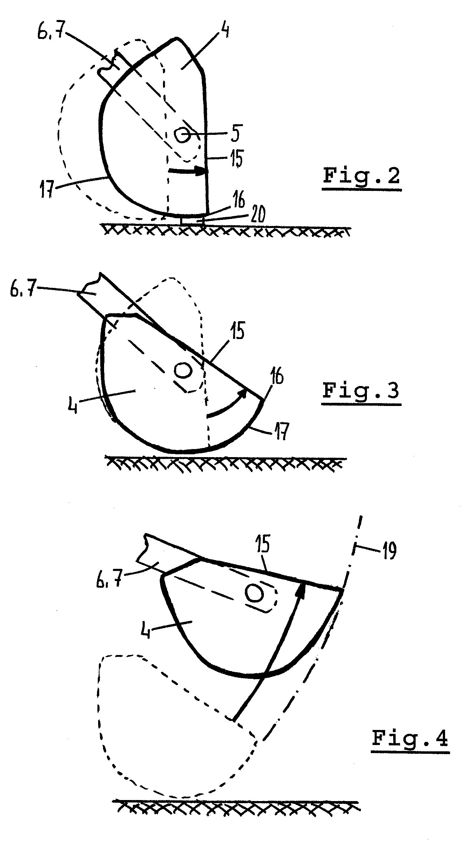

When fodder is to be detached from a stock of fodder 24 by means of the apparatus of Fig. 1 so as to be deposited into the mixing chamber 1, the following procedure is followed. While the pivoting arm 6, 7 is in the pivoted position as shown in Fig. 1, the scoop 4 is rotated to the position that is shown in Fig. 2 by means of the driving element 9. In this position, the open side 15 is substantially directed towards the stock of fodder (said stock of fodder is not shown in Figs. 2-6). Such a position is illustrated in dotted lines in Fig. 2. Then the entire mixing apparatus is moved in the direction of the stock of fodder 24, so that the position that is illustrated in full lines in Fig. 2 is reached. During said movement the front cutting edge 16 (and any other cutting edges bounding the open side 15 of the scoop) have cut through the stock of fodder 24.

The scoop 4 can also be inserted into the stock of fodder 24 without moving the mixing apparatus, which can be done by suitably manipulating the pivoting arm sections 6 and 7.

Then, as shown in Fig. 3, the scoop 4 is rotated by suitably driving the driving element 9, so that the front cutting edge 16 makes an arc-shaped upward cutting movement through the stock of fodder. In principle, the position of the pivoting arm 6, 7 does not change during this movement (although this is not absolutely necessary).

Then the pivoting arm 6, 7 is pivoted in anti-clockwise direction, as shown in Fig. 4, by activating the driving element 11, during which pivoting movement the relative rotational position between the pivoting arm 6, 7 and the scoop 4 is maintained. During said movement, the scoop 4 describes a circular arc around the horizontal pivot pin 18 of the pivoting arm 6, 7 (see Fig. 1). As a result of the preceding rotation of the scoop 4 as described with reference to Figs. 3, the open side 15 of the scoop 4 will face in the direction of movement of the scoop 4 during the pivoting movement of the pivoting arm 6, 7 as shown in Fig. 4, so that the fodder is cut loose from the stock of fodder 24 and loaded into the scoop 4 in an effective manner. During said movement, the front cutting edge 16 moves substantially along the path indicated by a chain-dotted line 19 in Fig. 4.

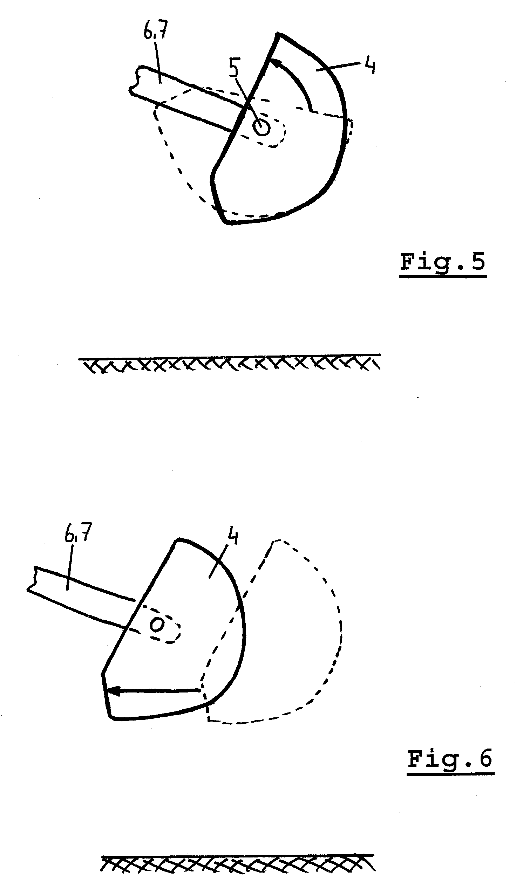

After the scoop 4 has been moved sufficiently far upwards from its lowermost position, by pivoting of the pivoting arm 6, 7 as shown in Fig. 4, for being loaded with the desired amount of fodder, the scoop 4 is rotated further about the horizontal axis of rotation 5 (likewise by activating the driving element 9), as is shown in Fig. 5. As a result, the fodder is completely cut loose from the part of the stock of fodder that is present thereabove, and loaded into the scoop 4. The position of the pivoting arm 6, 7 hardly changes, if at all, during this rotation of the scoop 4.

Finally, as shown in Figs. 6, the scoop 4 can be retracted from the stock of fodder 24 by moving the entire apparatus to the left. Following this, the scoop can be moved to a position above the mixing chamber 1 (illustrated in dotted lines in Fig. 1 and indicated by 4'), so that the contents of the scoop are deposited into the mixing chamber 1. In this position, the pivoting arm sections 6', 7' are pivoted relative to each other about the pivot pin 8.

Also in this case, suitable manipulation of the pivoting arm sections 6 and 7 may alternatively lead to the desired retraction of the scoop 4 from the stock of fodder 24 without moving the mixing apparatus in its entirety. Such a manipulation may also be used for selecting the path along which the scoop 4 moves while the fodder is being cut loose from the stock of fodder 24.

Instead of using an articulated pivoting arm, it is also possible to use a telescopic pivoting arm, with a comparable effect being obtained. Moreover, the telescoping movement may be linked (e.g. by means of a linkage) with the pivoting movement of the pivoting arm, in such a manner that the pivoting arm will telescope out automatically upon pivoting upwards. This is advantageous in particular in the case of stocks of fodder that are very high. In a comparable manner, the pivoting arm can be made to telescope back when the scoop is pivoted so as to be emptied into the mixing chamber.

While the fodder is being cut loose from the stock of fodder 24 by means of the scoop 4, the hold-down element 14 can prevent the part of the stock of fodder 24 present above the scoop 4 from undesirably becoming detached from the stock of fodder 24.

Spacers 20 (see Fig. 2) may be provided on the bottom side of the scoop 4, which spacers ensure that the scoop is correctly positioned with respect to a supporting surface. Said spacers may be swung aside or retracted during the cutting operation. This may also be achieved when such spacers are mounted on an extension of the pivoting arm (and consequently do not rotate along with the scoop 4).

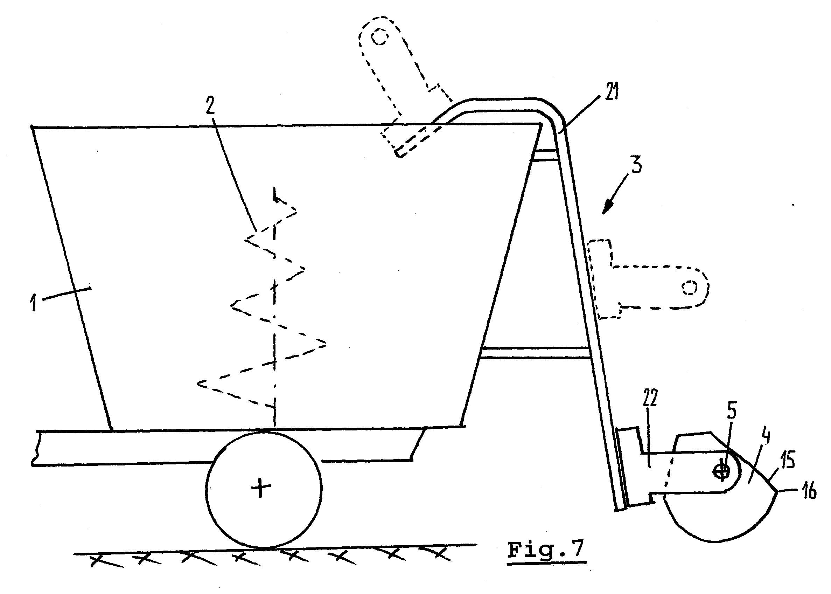

In the alternative embodiment of the mixing apparatus that is shown in Fig. 7, the pivoting arm 6, 7 has been exchanged for a guide 21 along which a slide 22 is movable, which slide rotatably supports the scoop 4. Unlike the apparatus that is shown in Fig. 1, the scoop 4 does not describe a circular arc during said movement, but it moves along a path determined by the shape of the guide.

It is noted that the scoop 4 does not necessarily have to describe a circular arc in the embodiment that is shown in Fig. 1, since it is also possible to obtain a different path of movement through suitable manipulation of the two pivoting arm sections 6, 7.

The invention is not limited to the embodiments as described above, which can be varied in many ways without departing from the scope of the invention as defined in the claims. Thus, the scoop 4 or the hold-down element 14 may be provided with an extension for scraping a cover layer (usually sand) off the stock of fodder. Furthermore, the loading device may be adapted for being disconnected from the remainder of the mixing apparatus and be moved autonomously (to which end it may be provided with a suitable number of wheels).

## Claims

1. A drivable mixing apparatus for fodder, comprising a mixing chamber provided with a mixing element and a loading device for detaching a desired amount of fodder from an external stock of fodder and depositing said amount into the mixing chamber, **characterized in that** the loading device comprises a scoop having an at least substantially open upper side, which can be moved in upward direction for the purpose of detaching fodder from the stock of fodder, and which can furthermore be rotated about a horizontal axis of rotation extending transversely to the plane of movement of the scoop, during which rotating movement the current vertical position of the scoop is substantially maintained, and which is provided with cutting means for detaching the fodder.

2. A mixing apparatus according to claim 1, wherein the scoop has a front horizontal cutting edge and a scoop bottom which joins said cutting edge, wherein, starting from the cutting edge, the distance between a point thereof and the axis of rotation is maximally equal to the distance between said axis of rotation and the horizontal cutting edge, at least for a first part of the scoop bottom.

3. A mixing apparatus according to claim 2, wherein the relevant first part of the scoop bottom substantially describes a circular arc, with the axis of rotation as the centre.

4. A mixing apparatus according to claim 1, 2 or 3, wherein the edges of the scoop that engage the fodder during the detaching operation are embodied as cutting members, e.g. cutting knives capable of linear reciprocating movement.

5. A mixing apparatus according to any one of the preceding claims, wherein the scoop is connected to the end of a pivoting arm that pivots about a horizontal pivot pin.

6. A mixing apparatus according to claim 5, wherein the pivoting arm is a two-part, articulated pivoting arm comprising a central, secondary horizontal pivot pin.

7. A mixing apparatus according to claim 5, wherein the pivoting arm is telescopic.

8. A mixing apparatus according to claim 5, 6 or 7, wherein twin pivoting arms are used.

9. A mixing apparatus according to any one of the claims 1 - 4, wherein the scoop is mounted on a slide that can move upward and downward along a guide.

10. A mixing apparatus according to any one of the preceding claims, wherein the loading device is fitted with means for determining the weight of the fodder present in the scoop.

11. A mixing apparatus according to any one of the preceding claims, wherein scoop is provided with means for clamping down therein fodder that has been detached from the stock of fodder.

12. A mixing apparatus according to any one of the preceding claims, further provided with a hold-down device for engaging the upper side of the stock of fodder during the detachment of fodder by means of the scoop.

13. A mixing apparatus according to claim 13, wherein said hold-down device comprises two hold-down arms which are pivotable about a horizontal pivot pin, the free ends of which arms are each provided with a hold-down element.

14. A mixing apparatus according to any one of the preceding claims, wherein said loading device consists of an autonomously drivable unit that can be disconnected from the remainder of the mixing apparatus.
